(19)

Europäisches Patentamt

European Patent Office

Office européen des brevets

(11) **EP 2 705 417 B1**

## (12) EUROPÄISCHE PATENTSCHRIFT

(45) Veröffentlichungstag und Bekanntmachung des Hinweises auf die Patenterteilung:
**29.08.2018 Patentblatt 2018/35**

(21) Anmeldenummer: **12716044.8**

(22) Anmeldetag: **24.04.2012**

(51) Int Cl.:
*G06F 3/01* (2006.01)    *G06F 3/03* (2006.01)
*G06F 3/0354* (2013.01)    *G01B 11/00* (2006.01)
*G01B 11/03* (2006.01)    *G06F 3/0346* (2013.01)
*G06T 7/73* (2017.01)

(86) Internationale Anmeldenummer:
**PCT/EP2012/057446**

(87) Internationale Veröffentlichungsnummer:
**WO 2012/150147 (08.11.2012 Gazette 2012/45)**

(54) **VERFAHREN ZUR BESTIMMUNG DER RELATIVEN LAGE EINES OBJEKTS IM RAUM SOWIE OPTISCHES EINGABESYSTEM**

METHOD FOR DETERMINING THE RELATIVE POSITION OF AN OBJECT IN AN AREA, AND OPTICAL INPUT SYSTEM

PROCÉDÉ POUR DÉTERMINER LA POSITION RELATIVE D'UN OBJET DANS L'ESPACE AINSI QUE SYSTÈME D'ENTRÉE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2011 DE 102011075253**

(43) Veröffentlichungstag der Anmeldung:
**12.03.2014 Patentblatt 2014/11**

(73) Patentinhaber: **Eberhard Karls Universität Tübingen**
**72074 Tübingen (DE)**

(72) Erfinder:
• **MASSELLI, Andreas**
**72070 Tübingen (DE)**
• **WENZEL, Karl Engelbert**
**71364 Winnenden (DE)**
• **ZELL, Andreas**
**72827 Wannweil (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**WO-A1-2004/114112    US-A1- 2009 070 065**

• **KARL ENGELBERT WENZEL ET AL: "Automatic Take Off, Tracking and Landing of a Miniature UAV on a Moving Carrier Vehicle", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, Bd. 61, Nr. 1 - 4, 23. Oktober 2010 (2010-10-23), Seiten 221-238, XP019855701, ISSN: 1573-0409, DOI: 10.1007/S10846-010-9473-0 in der Anmeldung erwähnt**
• **FISCHLER M A ET AL: "RANDOM SAMPLE CONSENSUS: A PARADIGM FOR MODEL FITTING WITH APPLICATIONS TO IMAGE ANALYSIS AND AUTOMATED CARTOGRAPHY", COMMUNICATIONS OF THE ASSOCIATION FOR COMPUTING MACHINERY, ACM, NEW YORK, NY, US, Bd. 24, Nr. 6, 1. Juni 1981 (1981-06-01), Seiten 381-395, XP001149167, ISSN: 0001-0782, DOI: 10.1145/358669.358692 in der Anmeldung erwähnt**

- Christian Gebken: "Conformal Geometric Algebra in Stochastic Optimization Problems of 3D-Vision Applications", , 21 October 2009 (2009-10-21), pages 1-268, XP055398398, Doctoral dissertation, Christian-Albrechts Universität Kiel Retrieved from the Internet: URL:http://macau.uni-kiel.de/servlets/MCRF ileNodeServlet/dissertation_derivate_00002 993/CGebkendiss2009.pdf?hosts=local [retrieved on 2017-08-14]

**Beschreibung**

HINTERGRUND

Die Erfindung bezieht sich auf ein Verfahren zur Bestimmung der relativen Lage eines Objekts im Raum in sechs räumlichen Freiheitsgraden gemäß dem Oberbegriff von Anspruch 1 sowie auf ein optisches Eingabesystem gemäß dem Oberbegriff von Anspruch 6.

Optische Eingabesysteme können beispielsweise genutzt werden, um Funktionen von angeschlossenen Endgeräten zu steuern. Ein ansteuerbares Endgerät kann beispielsweise ein Personalcomputer (PC) oder eine Spielkonsole oder ein Fernsehapparat oder dergleichen sein.

Es gibt zahlreiche Eingabesysteme, die in Verbindung mit einem Computer eingesetzt werden können, um Funktionen des Computers zu steuern. Eine konventionelle Maus, die vom Nutzer manuell auf einer ebenen Unterlage bewegt werden kann und über ein Kabel oder kabellos über Funk mit einem Computer kommuniziert, erlaubt beispielsweise die Steuerung der Position eines computergenerierten Mauszeigers auf dem Bildschirm des Computersystems. Durch Betätigung einer Maustaste können unterschiedliche Aktionen in dem Betriebssystem oder einer Anwendung ausgelöst werden.

Es gibt viele Anwendungen, für deren Steuerung eine Eingabe mit mehr als zwei Freiheitsgraden vorteilhaft ist oder benötigt wird. Beispielsweise ist es für viele Videospiele oder Grafikanwendungen wünschenswert, ein Eingabesystem zu haben, das die Steuerung von computergenerierten Objekten in mehr als zwei Dimensionen ermöglicht, insbesondere in allen sechs räumlichen Freiheitsgraden (6D-Eingabesystem). Ein 6D-Eingabesystem hat im Allgemeinen ein handgehaltenes (hand-held) Eingabegerät, das von einem Bediener mit einer Hand gehalten und sowohl translatorisch im Raum bewegt als auch in verschiedene Richtungen geschwenkt bzw. gedreht werden kann. Mit einem 6D-Eingabesystem sollte es möglich sein, sowohl die Position des Eingabegeräts im Raum als auch die Orientierung des Eingabegeräts im Raum mit einer für die Steuerungsaufgabe ausreichenden Geschwindigkeit und Genauigkeit zu bestimmen, so dass Bewegungen des Eingabegeräts zur Steuerung des Endgeräts genutzt werden können.

Das Patent US 6,417,836 B1 beschreibt ein Verfahren zur Bestimmung der relativen Lage eines Eingabegeräts im Raum in sechs räumlichen Freiheitsgraden. Das Eingabegerät hat einen Griff, an dessen oberen Ende eine Platte angebracht ist, die ein Markierungsmuster mit fünf koplanar angeordneten Leuchtmarkierungen in Form von LEDs trägt. Dieses Eingabegerät wird im Erfassungsbereich einer Kamera derart bewegt, dass die Markierungen auf zugeordnete Bildpositionen der zweidimensionalen Sensorfläche der Kamera abgebildet bzw. projiziert werden. Aus den zugehörigen Bildkoordinaten wird mit Hilfe eines computernumerischen Auswertungsverfahrens die relative Lage des Markierungsmusters bestimmt. Dazu werden Videosignale von der Kamera zu einem von der Kamera getrennten Computer übertragen, dessen Rechenleistung ausreicht, das Auswertungsverfahren durchzuführen. Bei der Auswertung wird jeder der Markierungen eine Kennzeichnung (label) zugeordnet, um eine Unterscheidung der Markierungen untereinander zu ermöglichen. Bei einer Variante wird die Unterscheidung der Markierungen dadurch erreicht, dass diese unterschiedliche Farben haben. Bei einer anderen Variante wird die Kennzeichnung dadurch erreicht, dass die Bewegung von Bildern der Markierungen über mehrere aufeinanderfolgende Bilder verfolgt wird (tracking). Eine andere Variante zur Identifizierung bzw. Kennzeichnung der Markierungen nutzt geometrische Beziehungen zwischen den fünf in einer gemeinsamen Ebene liegenden Markierungen.

Die US 2009/0070065 A1 beschreibt ein Positionsmesssystem, welches eine Bilderfassungseinheit zum Erfassen erster Referenzpunkte aufweist, bei denen es sich um drei Referenzpunkte in einer an einem Zielgegenstand angeordneten Ebene handelt und deren relative Positionsbeziehungen zueinander spezifiziert sind. Außerdem wird ein zweiter Referenzpunkt erfasst, bei dem es sich um einen einzelnen Referenzpunkt mit Abstand von der Ebene handelt, wobei dessen Positionsbeziehung mit den ersten Referenzpunkten ebenfalls spezifiziert ist. Weiterhin ist eine Identifizierungseinheit vorgesehen, die Bilder der ersten und zweiten Referenzpunkte basierend auf den Positionsbeziehungen der Bilder identifiziert. Weiterhin ist eine Recheneinheit vorgesehen, die eine dreidimensionale Position und dreiachsige Winkel des Zielgegenstands basierend auf den relativen Positionsbeziehungen zwischen den Bildern der ersten und zweiten Referenzpunkte ermittelt. Die Recheneinheit spezifiziert die die ersten Referenzpunkte enthaltende Ebene am Zielgegenstand von den Bildern der ersten Referenzpunkte sowie eine Normalenrichtung zu dieser Ebene entsprechend dem Bild des zweiten Referenzpunkts.

Die WO 2004/114112 A1 beschreibt ein Eingabegerät für eine dreidimensionale Dateneingabe mit sechs Freiheitsgraden für einen Computer. Das Eingabegerät hat eine Anordnung eines ersten Felds von Tracking-Punkten, um eine erste Achse zu definieren, und ein zweites Feld von Tracking-Punkten zum Definieren einer zweiten Achse oder Ebene senkrecht zur ersten Achse, wobei Abstände zwischen den Tracking-Punkten so gewählt sind, dass ein zweidimensionales Bild der Tracking-Punkte verwendet werden kann, um die Position und Orientierung des Eingabegeräts im dreidimensionalen Raum bei Verwendung eines vorgegebenen Algorithmus zu bestimmen. Weiterhin hat das Eingabegerät mindestens ein Abbildungssystem und mindestens einen Prozessor.

## AUFGABE UND LÖSUNG

Es ist eine Aufgabe der Erfindung, ein Verfahren der eingangs beschriebenen Art sowie ein korrespondierendes Eingabesystem bereitzustellen, die mit kostengünstigen Komponenten arbeiten können und eine schnelle und exakte Bestimmung der relativen Lage eines Objekts im Raum in sechs räumlichen Freiheitsgraden ermöglichen.

Zur Lösung dieser Aufgabe stellt die Erfindung ein Verfahren mit den Merkmalen von Anspruch 1 bereit. Weiterhin wird ein optisches Eingabesystem mit den Merkmalen von Anspruch 6 bereitgestellt.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Erfinder haben erkannt, dass ein Invarianzpunkt B in der Referenzebene existiert, mit dessen Hilfe sich die Position des Projektionszentrums berechnen lässt. Die Position des Invarianzpunktes beschreibt eine eindeutige Beziehung zwischen einem dem Muster zugeordneten Koordinatensystem (repräsentiert durch die dritte Markierung des Markierungsmusters, der der Fußpunkt $M_i'$ zugeordnet ist) und einem der Erfassungseinrichtung zugeordneten Koordinatensystem (repräsentiert durch das Projektionszentrum $P_i$). Weiterhin wurde erkannt, dass die Position des Invarianzpunktes in der Referenzebene ausgehend von den Bildern der Markierungen berechnet werden kann, ohne dass die relative Position von Erfassungseinrichtung und Markierungsmuster zunächst bekannt sind.

Bei dem Verfahren wird ein Referenzkreis ermittelt, der durch die erste Markierung, die zweite Markierung und das Projektionszentrum verläuft und einen Mittelpunkt hat, wobei die Position des Invarianzpunktes auf dem Referenzkreis ermittelt wird. Dadurch ist unter Nutzung von Regeln zur Kreisgeometrie eine besonders schnelle, exakte und robuste bzw. numerisch stabile Auswertung möglich.

Bei dem Verfahren werden nur drei Markierungen für eine exakte Berechnung der Lage (Position und Orientierung) benötigt. Diese müssen eine Dreiecksanordnung bilden, dürfen also nicht auf einer gemeinsamen geraden Linie angeordnet sein. Der gegenseitige Abstand der Markierungen sollte in Abhängigkeit von der örtlichen Auflösung des Sensors der Erfassungseinrichtung so groß sein, dass bei typischen Arbeitsabständen zur Erfassungseinrichtung die zugehörigen Bildpositionen auf der Sensorfläche sicher unterscheidbar sind. Weitere Einschränkungen hinsichtlich der Anordnung der Markierungen gibt es nicht. Weiterhin wird nur eine einzige optische Erfassungseinrichtung benötigt.

Vorzugsweise werden nur drei Markierungen für eine exakte Berechnung der relativen Lage genutzt. Bei manchen Ausführungsformen des Eingabesystems hat das Markierungsmuster dementsprechend genau drei Markierungen.

Die Markierungen können hinsichtlich ihrer Eigenschaften, z.B. hinsichtlich Farbe, Form und Größe, im Wesentlichen identisch sein, was den Aufbau vereinfacht.

Vorzugsweise bilden die erste, die zweite und die dritte Markierung ein gleichschenkliges Dreieck, dessen Basis zwischen der ersten und der zweiten Markierung verläuft. Die symmetrische Anordnung als gleichschenkliges Dreieck vereinfacht und beschleunigt die Auswertung, so dass der Bedarf an Rechenleistung nochmals verringert werden kann. Die Basiswinkel des gleichschenkligen Dreiecks liegen vorzugsweise zwischen 20° und 70°. Werden die Basiswinkel deutlich kleiner als 20°, so besteht die Gefahr, dass die Winkelauflösung bei der Bestimmung der Orientierung leidet. Bei Basiswinkeln deutlich über 70° steigt die Gefahr, dass aus gewissen Perspektiven eine Markierung durch eine anderen Markierung verdeckt werden kann, so dass die Sichtbarkeit durch die Erfassungseinrichtung nicht mehr gewährleistet ist.

Bei manchen Ausführungsformen ist zusätzlich zu der ersten, zweiten und dritten Markierung noch eine vierte Markierung vorgesehen. Diese kann genutzt werden, um die Auswertung noch robuster zu machen, da es mit Hilfe einer vierten Markierung möglich ist, bei der Suche der exakten Lösung der Lagebestimmung aus mehreren zunächst möglichen Lösungen die bei der Anwendungssituation tatsächlich vorliegende Situation zu identifizieren.

Vorzugsweise liegt die vierte Markierung in Linie mit der ersten und der zweiten Markierung. Dadurch kann die Zuordnung der Bilder der Markierungen zu den zugehörigen Markierungen bei der Auswertung erleichtert und beschleunigt werden. Die vierte Markierung kann zwischen der ersten und zweiten Markierung liegen oder außerhalb der Strecke, die die erste und zweite Markierung verbindet. Es kann günstig sein, wenn die kollinear liegenden Markierungen (erste, zweite und vierte Markierung) nicht die gleichen Abstände zueinander haben, also entlang der Linie ungleichmäßig verteilt sind. Dadurch kann die Identifizierung nochmals erleichtert werden.

Beim Auswählen der für die Auswertung verwendeten Bildpositionen wird vorzugsweise ein Sortierungsschritt zur Zuordnung zwischen den auf der Sensorfläche vorliegenden Bildpositionen und den zugehörigen Markierungen des Markierungsmusters durchgeführt. Abhängig vom Anwendungsfall können unterschiedliche Varianten genutzt werden. Vorzugsweise wird ein Sortierverfahren aus der folgenden Gruppe ausgewählt: (i) Sortierung entlang mindestens einer vorgegebenen Bildrichtung; (ii) Sortierung durch Bewegungsverfolgung; (iii) Permutieren möglicher Zuordnungen und Identifizierung der richtigen Zuordnung durch Plausibilitätsprüfung; und: (iv) Nutzung einer zusätzlichen vierten Markierung.

Die Durchführung des Auswertungsverfahrens erfordert nur relativ geringe Rechenleistung. Daher ist bei manchen Ausführungsformen vorgesehen, dass das Auswertungsverfahren in einer der Erfassungseinrichtung zugeordneten Recheneinheit durchgeführt wird und von der Recheneinheit die Lage des Objekts repräsentierende digitale Lagedaten an eine Verarbeitungseinheit des Endgeräts zur Weiterverarbeitung übertragen werden. Dadurch ist es nicht nötig, auf bzw. in dem Endgerät Auswertesoftware zur Durchführung des Verfahrens zu installieren, so dass am Endgerät eine Ressourcen schonende Arbeitsweise möglich ist. Außerdem ergibt sich eine u.a. erhöhte Ausfallsicherheit, weil beispielsweise die Lagebestimmung nicht durch hohe Systemauslastung auf dem Endgerät beeinträchtigt werden kann. Weiterhin ergibt sich eine hohe Flexibilität des Eingabesystems, da dieses bezüglich des Endgeräts plattformunabhängig arbeiten kann.

Die Erfindung bezieht sich auch auf ein optisches Eingabesystem zur Erzeugung von digitalen Lagedaten, die die relative Lage des Eingabegeräts im Raum in sechs räumlichen Freiheitsgraden relativ zu einer optischen Erfassungseinrichtung repräsentieren. Das Eingabesystem umfasst ein handgehaltenes Eingabegerät, an dem ein Markierungsmuster mit einer ersten Markierung, einer zweiten Markierung und einer dritten Markierung (M) angebracht ist, sowie eine optische Erfassungseinrichtung mit einer zweidimensionalen Sensorfläche und einer Projektionsoptik, die in Bezug auf die Sensorfläche so angeordnet ist, dass Bildinformation aus einem Erfassungsbereich der Erfassungseinrichtung auf die Sensorfläche projizierbar ist. Weiterhin ist eine Recheneinheit zur Bestimmung der digitalen Lagedaten vorgesehen.

Gemäß einer Formulierung der Erfindung ist das Erfassungssystem dadurch gekennzeichnet, dass die Recheneinheit zur Durchführung des in dieser Anmeldung als Erfindung beanspruchten Auswertungsverfahrens konfiguriert ist.

Gemäß einer anderen Formulierung ist das Erfassungssystem dadurch gekennzeichnet, dass es genau eine Erfassungseinrichtung, z.B. genau eine Kamera, aufweist, und dass das Markierungsmuster genau drei oder genau vier Markierungen aufweist. Diese Kombination von Merkmalen ist besonders in Kombination mit dem Auswertungsverfahren möglich, ggf. aber auch unabhängig davon.

Das Verfahren und das Eingabesystem sind zur Bestimmung der relativen Lage eines Objekts im Raum in sechs räumlichen Freiheitsgraden geeignet (6D-Anwendungen). Bei Bedarf kann damit selbstverständlich auch eine Bestimmung der relativen Lage in weniger als sechs Freiheitsgraden erfolgen, z.B. nur in einer Ebene (2 Freiheitsgrade, 2D-Anwendungen).

Diese und weitere Merkmale gehen außer den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele sind in den Zeichnungen dargestellt und werden im Folgenden näher erläutert.

## KURZBESCHREIBUNG DER ZEICHNUNGEN

Fig. 1 zeigt eine schematische Übersichtsdarstellung einer Ausführungsform eines optischen Eingabesystems zur Steuerung eines Endgeräts;

Fig. 2 bis 5 zeigen schematische Darstellungen zur Erläuterung der mathematischen Grundlagen einer Ausführungsform des Auswertungsverfahrens;

Fig. 6 zeigt in 6A eine Übersichtsdarstellung und in 6B ein Eingabegerät eines Eingabesystems zur Steuerung eines Fernsehgeräts;

Fig. 7 zeigt verschiedene Ansichten einer weiteren Ausführungsform eines Eingabegeräts;

Fig. 8 zeigt verschiedene Ansichten einer weiteren Ausführungsform eines Eingabegeräts;

Fig. 9 zeigt verschiedene Ansichten einer Ausführungsform eines stiftartigen Eingabegeräts; und

Fig. 10 zeigt verschiedene Ausführungsformen von schwertförmigen Eingabegeräten für Spieleanwendungen.

## DETAILLIERTE BESCHREIBUNG BEVORZUGTER AUSFÜHRUNGSFORMEN

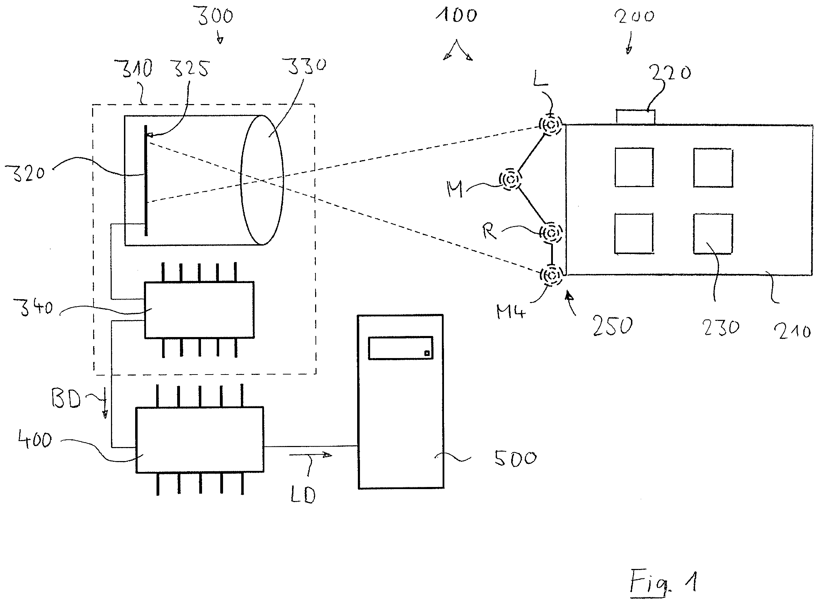

Figur 1 zeigt eine schematische Übersichtsdarstellung einer Ausführungsform eines Eingabesystems 100, das dazu vorgesehen ist, Funktionen eines Endgeräts zu steuern. Das nicht dargestellte Endgerät ist mit einer Verarbeitungseinheit 500 zur digitalen Verarbeitung der vom Eingabesystem gelieferten digitalen Lagedaten ausgestattet, gehört bei dieser Konfiguration also nicht zum Eingabesystem.

Zu dem Eingabesystem 100 gehört ein handgehaltenes, frei bewegliches Eingabegerät 200, das einen mit einer Hand bequem zu haltenden Griffabschnitt 210 aufweist, an dem außerhalb des Griffabschnitts an einer Vorderseite des Eingabegeräts ein Markierungsmuster 250 angebracht ist. Das Markierungsmuster 250 hat drei in einer Dreiecksanordnung angeordnete Markierungen, nämlich eine erste Markierung L, eine zweite Markierung R und eine dritte Markierung M. Diese Markierungen L, R und M bilden ein gleichschenkliges Dreieck, wobei die zwischen der ersten und der zweiten Markierung verlaufende Basis ca. 10% bis 50% länger ist als die gleich langen Schenkel zwischen der dritten und der ersten bzw. der dritten und der zweiten Markierung. Die Basiswinkel des Dreiecks (Innenwinkel an den Markierungen L und R) betragen hier jeweils ca. 37°.

Zusätzlich ist eine für die Funktion nicht notwendige, aber in manchen Fällen nützliche, optionale vierte Markierung M4 vorgesehen, die in Linie mit der ersten und der zweiten Markierung, also in Verlängerung der Basis des gleichschenkligen Dreiecks L-M-R angeordnet ist. Der Abstand R-M4 zwischen der zweiten Markierung R und der vierten Markierung M4 ist kleiner als der Abstand zwischen der ersten und der zweiten Markierung, so dass die auf einer gemeinsamen Linie liegenden Markierungen L, R und M4 auf dieser Linie ungleichmäßig verteilt sind. Die vierte Markierung erleichtert die Identifizierung der Markierungen als erste, zweite, dritte und vierte Markierung.

Die Geometrie des Markierungsmusters (Winkel, Abstände) ist vorgegeben und dem System bekannt.

Jede der quasi punktförmigen Markierungen ist als aktiv leuchtende Leuchtmarkierung ausgelegt und wird durch eine einzelne Licht emittierende Diode (LED) gebildet, die bei Aktivierung Licht aus dem Infrarotbereich (IR) abstrahlt. In das Gehäuse des Endgeräts ist eine leitungsunabhängige elektrische Leistungsversorgung (Batterie oder Akkumulator) eingebaut, an die die LEDs angeschlossen sind. Mit Hilfe eines am Gehäuse angebrachten Schalters 220 können die Leuchtdioden bei Bedarf ein- bzw. ausgeschaltet werden. An dem Eingabegerät können weitere Betätigungselemente 230 in Form von Tasten, Schaltern und/oder anderen berührungssensitiven Elementen vorgesehen sein, um zusätzliche Steuerungsfunktionen zu ermöglichen.

Auch kabelgebundene Varianten von Eingabegeräten sind möglich. Diese benötigen dann keine eigene Leistungsversorgung.

In diesem Ausführungsbeispiel sind die Markierungen L, R und M (und M4) selbst leuchtende Leuchtmarkierungen. Dies ist jedoch nicht zwingend. Der Begriff "Markierung" soll im Rahmen dieser Anmeldung auch passive Markierungen umfassen, die mit einer externen Lichtquelle angestrahlt oder angeregt werden können und dadurch für die Erfassungseinheit des Eingabesystems "sichtbar" werden. Markierungen können beispielsweise durch (passive), z.B. kugelförmige Retroreflektoren oder dergleichen gebildet sein. Markierungen können auch durch dunkle Kreuze oder andere Symbole auf hellem Hintergrund (oder umgekehrt) gebildet sein. Eine einzelne Markierung kann auch durch eine Gruppe von zwei oder mehr Punktlichtquellen gebildet sein, die so eng beieinander liegen, dass sie für die entfernte Erfassungseinrichtung als eine einzelne, einheitliche Markierung erscheinen. Wesentliches Merkmal einer Markierung ist es, dass sie im Betrieb des Erfassungssystems an einer zugeordneten Bildposition der Sensorfläche ein klar identifizierbares und lokalisierbares Bild erzeugt, wenn sich das Markierungsmuster sichtbar im Erfassungsbereich befindet.

Weiterhin umfasst das Eingabesystem eine optische Erfassungseinrichtung 300, die im Ausführungsbeispiel ein Kameramodul 310 aufweist. Die optische Erfassungseinrichtung hat einen z.B. mit einem CCD-Chip oder CMOS-Chip ausgestatteten ortsauflösenden Bildsensor 320 mit einer zweidimensionalen Sensorfläche 325 sowie eine Projektionsoptik 330, die in Bezug auf die Sensorfläche so angeordnet ist, dass Bildinformationen aus einem dreidimensionalen Erfassungsbereich der Erfassungseinrichtung auf die Sensorfläche projizierbar sind.

In das Kameramodul ist eine an den Sensor 320 angeschlossene Bilddatenermittlungseinheit 340 integriert, die die vom Sensor 320 bereitgestellten elektrischen Bildsignale in digital weiterverarbeitbare Bilddaten BD umwandelt. Hierzu kann im Kameramodul ein entsprechend programmierter Halbleiterbaustein vorgesehen sein. Im Beispielsfall repräsentieren die vom Kameramodul gelieferten Bilddaten BD die Bildkoordinaten der Bilder der drei Markierungen, welche mit Hilfe der Projektionsoptik 330 auf die Sensorfläche 325 erzeugt werden, wenn die Markierungen sich im Erfassungsbereich der Kamera befinden und dieser sichtbar zugewandt sind. Das Kameramodul 310 nimmt somit nicht nur die Bilder auf, sondern ermittelt zusätzlich nach Art einer intelligenten Kamera die Bildkoordinaten der projizierten Markierungen bzw. entsprechende Bilddaten.

Die digitalen Bilddaten BD werden zu einem Mikrocontroller 400 übertragen, der vom Kameramodul gesondert angeordnet oder gemeinsam mit dem Kameramodul in einer Einheit integriert sein kann. Auf bzw. in dem Mikrocontroller wird alleine auf Grundlage der vom Kameramodul gelieferten Bilddaten BD bzw. Bildkoordinaten die Raumlage des Kameramoduls 310 relativ zum Markierungsmuster 250 bestimmt. Hierzu ist ein noch erläutertes Auswertungsverfahren implementiert, welches zunächst die relative Position und anschließend die Orientierung des Kameramoduls relativ zum Markierungsmuster 250 bestimmt. Durch eine Koordinatentransformation ergibt sich dann automatisch auch die relative Position und Orientierung des Markierungsmusters bzw. des Eingabegeräts 200 relativ zum Kameramodul 310.

Der Mikrocontroller 400 liefert entsprechende digital verarbeitbare Lagedaten LD an die Verarbeitungseinheit 500. Diese Lagedaten enthalten Raumlagedaten, die beispielsweise als Positionskoordinaten x, y und z in einem karthesischen Koordinatensystem vorliegen können, sowie Orientierungsdaten, die beispielsweise in Form von Daten vorliegen können, welche eine 3 x 3-Rotationsmatrix repräsentieren.

Auch andere Charakterisierungen der relativen Orientierung, beispielsweise mit Hilfe von drei Rotationswinkeln (roll-pitch-yaw, Eulerwinkel etc.) sind möglich.

Die Bilddatenermittlungseinheit 340 und der Mikrocontroller 400 stehen beispielhaft für eine erste und eine davon gesonderte zweite Recheneinheit, die die beschriebenen Funktionen ausführen können. Die beiden Rechenoperationen (Erzeugung der Bilddaten BD aus den Signalen des Sensors und Erzeugung der Lagedaten LD aus den Bilddaten BD) können auch von einer einzigen, entsprechend konfigurierten Recheneinheit des Erfassungssystems ausgeführt werden, z.B. durch einen entsprechend konfigurierten FGPA (Field Programmable Gate Array).

Bei vielen üblichen Anwendungen wird der Abstand zwischen der Erfassungseinrichtung 300 und dem Markierungsmuster 250 bei der Nutzung zwischen ca. 0.5 m und ca. 6 m liegen, gelegentlich auch darunter oder darüber. Die Markierungen haben in solchen Fällen häufig typische Abstände zueinander im Bereich von einem oder mehreren Zentimetern, z.B. zwischen 10 mm und 100 mm, insbesondere zwischen 20 mm und 60 mm.

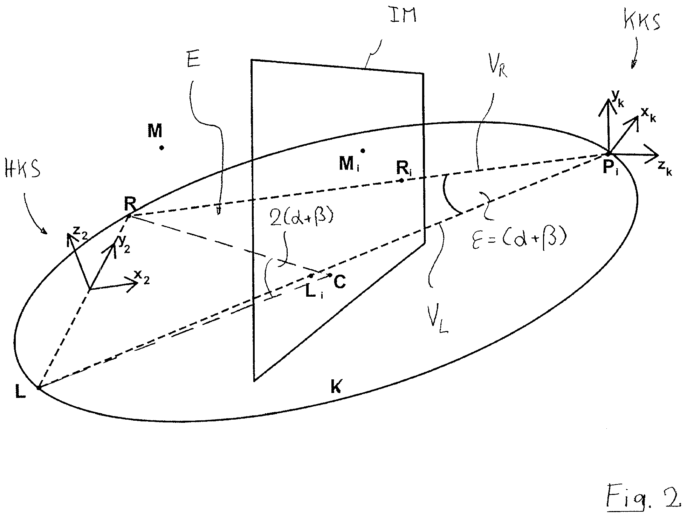

Im Folgenden werden anhand der Figuren 2 bis 5 die mathematischen Grundlagen einer Ausführungsform des Auswertungsverfahrens beschrieben.

Das Problem, die relative Lage (Position und Orientierung) im Raum einer Kamera anhand einer Gruppe von Markierungen zu berechnen, ist in Fachkreisen als Perspective-N-Point Problem bekannt. Eine instruktive Darstellung ist z.B. zu finden in dem Artikel: "Random Sample Consensus: A Paradigm for Model Fitting with Applications to Image Analysis and Automated Cartography" von M. A. Fischler und R. C. Bolles in: Commun. ACM, 24(6), Seiten 381 - 395 (1981). Bei der Betrachtung des dreidimensionalen Problems spricht man auch vom Perspective-3-Point Problem oder kurz vom P3P-Problem. Fischler et al. behandeln das P3P-Problem unter Anwendung des Kosinussatzes. Der vorgeschlagene Lösungsansatz beruht auf der Berechnung der Verhältnisse von Längen von zu den Markierungen führenden Vektoren, die als Kanten eines Tetraeders angesehen werden können. Bei der rechenintensiven komplexen Berechnung kann es u.a. zu Singularitäten aufgrund der Division durch sehr kleine Zahlenwerte kommen, wodurch die Gefahr numerischer Instabilität entsteht. Eine weitere Lösung des P3P-Problems wird in der Dissertation "Conformal geometric algebra in stochastic optimization problems of 3D-vision applications" von Christian Gebken, Christian-Albrechts Universität Kiel, Seiten 135 - 144 (2009), vorgestellt, welche allerdings mathematisch aufwändig zu berechnen ist.

Die von den Erfindern entwickelte Lösung dieses Problems ist dagegen sehr robust, basiert auf einen relativ schlanken mathematischen Formalismus und ist dadurch effizient genug, um selbst auf einem relativ leistungsschwachen Mikrocontroller noch mit hoher Geschwindigkeit umgesetzt zu werden. Im Gegensatz zu einem konventionellen Lösungsansatz (siehe z.B. Artikel "Automatic Take Off, Tracking and Landing of a Miniature UAV on a Moving Carrier Vehicle" von K. E. Wenzel, A. Masselli und A. Zell in: Journal of Intelligent & Robotic Systems, 61, Seiten 221 - 238 (2010) basiert diese Lösung nicht auf Schätzungen, deren Exaktheit mit Kontrollrechnungen unter Verwendung weiterer Markierungen überprüft werden muss. Vielmehr wird systematisch eine exakte Lösung des Problems gefunden, wobei für die exakte Lagebestimmung prinzipiell nur drei nicht-kollineare Markierungen benötigt werden.

Es folgt die Darstellung der Herleitung einer bevorzugten Variante der Lösung.

In den Figuren bezeichnen die Buchstaben L (Links), M (Mitte) und R (Rechts) die Positionen der ersten Markierung L, der zweiten Markierung R und der dritten Markierung M des Markierungsmusters im Raum. Diese Bezeichnung wird allein aus Gründen der Anschaulichkeit gewählt und soll die Allgemeingültigkeit des Ansatzes nicht einschränken. Die in der Bildebene IM der Kamera am Ort der Sensorfläche 325 entstehenden Projektionen bzw. Bilder dieser Markierungen bzw. die zu den Markierungen gehörenden Bildpositionen werden entsprechend mit $L_i$, $R_i$ und $M_i$ bezeichnet, wobei der Index "i" hier anschaulich für "image" (Bild) steht. Die Bildpositionen ergeben sich durch Projektion der Markierungen mittels der Projektionsoptik. Das Projektionszentrum dieser Projektion wird mit $P_i$ gekennzeichnet, entspricht dem Ursprung der Kamera und definiert den Bezugspunkt des Kamera-Koordinatensystems KKS, das für die Positionsbestimmung des Musters genutzt wird.

Ein später noch erläutertes rechtshändiges Hilfskoordinatensystem HKS hat seinen Ursprung in der Mitte der Strecke L-R zwischen der ersten und der zweiten Markierung, wobei die y-Achse in Richtung der zweiten Markierung R weist und seine x-Achse in einer später noch erläuterten Referenzebene E liegt. Das Hilfskoordinatensystem ist mit dem Markierungsmuster verknüpft.

Die Schreibweise $\angle(A,B)$ steht für den Winkel zwischen den Vektoren $\vec{A}$ und $\vec{B}$, der berechnet werden kann durch: $\arccos\left(\dfrac{A \cdot B}{|A| \cdot |B|}\right)$. Gegeben sind somit drei Markierungen L, R und M und deren Abbildungen $L_i$, $R_i$ und $M_i$ auf einer zweidimensionalen Sensorfläche IM.

Zunächst erfolgt ein Sortierungsschritt zur Zuordnung zwischen den auf der Sensorfläche erfassten Bildern bzw. Bildpositionen und den zugehörigen (realen) Markierungen. Über den Sortierungsschritt werden somit die erste, die zweite und die dritte Markierung identifiziert bzw. ausgewählt. Nach Abschluss des Sortierungsschritts ist bekannt, welcher Bildpunkt der auf der Sensorfläche vorliegenden Bildpunktgruppe der ersten, zweiten und dritten Markierung entspricht. Für die Sortierung gibt es unterschiedliche Möglichkeiten, u.a die folgenden:

(i) Sortierung entlang mindestens einer vorgegebenen Bildrichtung. Bei einer Sortierung in X-Richtung des Bildfeldes (von links nach rechts) wird z.B der am weitesten links liegende Bildpunkt der ersten Markierung zugeordnet, der darauf in X-Richtung folgende der dritten Markierung etc. Alternativ oder zusätzlich kann auch eine Sortierung in Y-Richtung durchgeführt werden.

(ii) Sortierung durch Bewegungsverfolgung, wobei Bewegungen von Bildern der Markierungen über mehrere aufeinanderfolgende Bilder verfolgt werden (tracking).

(iii) Permutieren möglicher Zuordnungen und Identifizierung der richtigen Zuordnung durch Plausibilitätsprüfung. Bei nur drei Markierungen gibt es nur 6 mögliche Zuordnungen. Diese können alle durchgerechnet werden. Die richtige Zuordnung wird durch Plausibilitätsprüfung identifiziert.

(iv) Zusätzliche vierte Markierung: Bei vier Markierungen kann das Markierungsmuster so konstruiert werden, dass die Zuordnung in vielen Fällen ohne Bewegungsverfolgung, Permutieren oder Sortieren nach Bildrichtung unmittelbar und eindeutig erfolgen kann. Dabei liegt die vierte Markierung vorzugsweise auf einer Linie mit der ersten (linken) und der zweiten (rechten) Markierung. Ungleiche Abstände zwischen diesen Markierungen erleichtern die Sortierung.

Bei Bedarf können auch mehrere dieser Varianten kombiniert werden.

Nun wird rechnerisch eine Referenzebene E konstruiert, die durch die Punkte $L_i$, $R_i$ und $P_i$ definiert ist. Ein erster Vektor $V_L$ zwischen dem Projektionszentrum und der ersten Bildposition $L_i$ und ein zweiter Vektor $V_R$ zwischen dem Projektionszentrum und der zweiten Bildposition $R_i$ schließen dabei einen ersten Winkel $\varepsilon = (\alpha + \beta)$ ein und spannen die Referenzebene E auf. Das mit kurzen Strichen dargestellte Dreieck $P_i$-L-R zeigt die Lage der Referenzebene E, die wegen der Projektion auch durch die erste und zweite Markierung (L und R) verläuft.

Der erste Winkel $\varepsilon = \angle(L_i, R_i)$ kann mit der Kenntnis über die Brennweite f der Kamera berechnet werden und ist somit eine unmittelbar aus den Bildkoordinaten von $L_i$ und $R_i$ bestimmbare Größe.

Eine nächste Rechenoperation ermittelt einen Referenzkreis K, der durch die erste Markierung L, die zweite Markierung R und das Projektionszentrum $P_i$ verläuft und einen Mittelpunkt C hat. Hierzu wird der erweiterte Satz des Thales (Inscribed Angle Theorem) bzw. der Kreiswinkelsatz genutzt. Dieser besagt in einer Formulierung, dass der Mittelpunktswinkel (Zentriwinkel) eines Kreisbogens doppelt so groß ist wie einer der zugehörigen Umfangswinkel (Peripheriewinkel). Der bei $P_i$ liegende Umfangswinkel ist der bekannte ersten Winkel $\varepsilon = (\alpha + \beta)$. Anschaulich liegt der Mittelpunkt C des Referenzkreises dann am Ort des Scheitelpunkts eines gleichschenkligen Dreiecks durch L, R und C, wobei der Scheitelwinkel am Scheitel C das Doppelte des ersten Winkels, also $2\varepsilon$ bzw. $2(\alpha + \beta)$ beträgt.

Ausgedrückt in Koordinaten des Hilfskoordinatensystems HKS besagt der erweiterte Satz des Thales, dass $P_i$ auf einem Kreis K mit dem Mittelpunkt

$$C = \left( \frac{y_R}{\tan(\varepsilon)}, \mathbf{0} \right)$$

liegt, wobei $Y_R$ die y-Koordinate von R im Hilfskoordinatensystem ist. Durch die zweckmäßige Definition des Hilfskoordinatensystems geht dessen x-Achse durch C, so dass die y-Koordinate des Mittelpunkts C gleich Null ist.

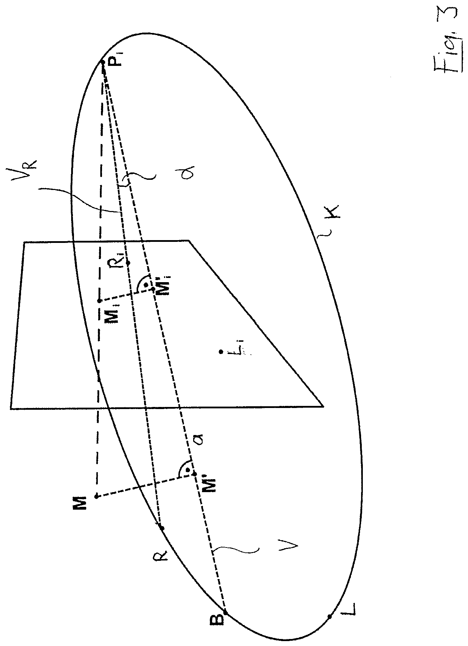

Im Zusammenhang mit Fig. 3 wird nun erläutert, auf welche Weise die Information über die dritte Markierung M genutzt wird, der auf der Sensorfläche die dritte Bildposition $M_i$ zugeordnet ist. Eine senkrechte Projektion der zu der dritten Markierung M gehörenden dritten Bildposition $M_i$ auf die Referenzebene E definiert einen Fußpunkt $M_i'$ der dritten Bildposition. In gleicher Weise erhält man durch Fällen des Lots von der dritten Markierung M auf die Referenzebene E deren Fußpunkt M'. Da die Fußpunkte M' und $M_i'$ durch Projektion miteinander verknüpft sind, läuft eine gestrichelt dargestellte Verbindungsgerade V durch das Projektionszentrum.

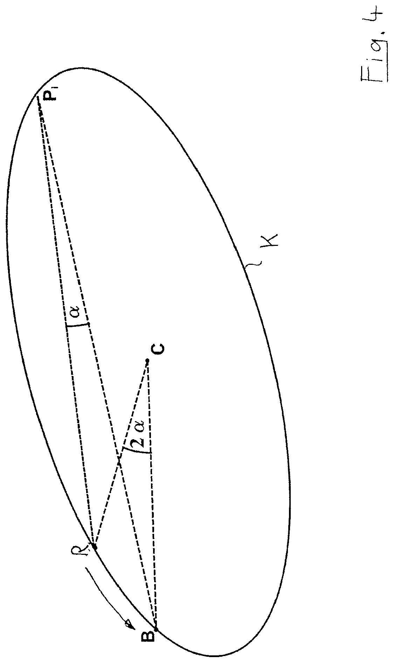

Diese Verbindungsgerade V teilt den an $P_i$ vorliegenden ersten Winkel $\varepsilon = (\alpha + \beta)$ in zwei Teilwinkel $\alpha$ und $\beta$ auf, wobei $\alpha$ der Winkel zwischen dem zweiten Vektor $V_R$ und der Verbindungsgerade V und der (nicht dargestellte) Winkel $\beta$ der Restwinkel, also der Winkel zwischen dem ersten Vektor $V_L$ und der Verbindungsgerade V ist. Mit Hilfe von M bzw. $M_i$ kann somit der Winkel $\alpha = \angle(M_i', R_i)$ bestimmt werden, mit dessen Hilfe sich der Invarianzpunkt B, der ebenfalls auf K liegt, bestimmen lässt. Bei Kenntnis der Größe des Teilwinkels $\alpha$ kann die Position von B durch eine weitere Anwendung des erweiterten Satzes von Thales ermittelt werden (vgl. Fig. 4). Zu dem Peripheriewinkel $\alpha$ gehört der doppelt so große Mittelpunktswinkel bzw. Zentriwinkel $2\alpha$. Ausgehend von der Position der zweiten Markierung R kann die Position von B durch Rotation um $2\alpha$ des Punktes R um C (siehe Pfeil) bestimmt werden.

Der Invarianzpunkt B hat unter anderem die Eigenschaft, dass er auf dem Referenzkreis K liegt und dass er den Schnittpunkt der Verbindungsgerade V zwischen $P_i$ und $M_i'$ und dem Referenzkreis bildet.

B ist für alle möglichen Positionen von $P_i$ auf dem Referenzkreis K konstant, weshalb B als Invarianzpunkt bezeichnet wird.

Es existiert ein funktionaler Zusammenhang zwischen den Positionen des Fußpunkts $M_i'$ und dem Projektionszentrum $P_i$, der aufgrund geometrischer Zusammenhänge bestimmbar ist. P kann auch als Funktion der Koordinate $x_{M'}$ (x-Koordinate von M' im HKS) ermittelt werden, da die zugehörige y-Koordinate $y_{M'}$ konstant ist. Aufgrund der Wahl des symmetrischen Markierungsmusters (gleichschenkliges Dreieck) kann die Berechnung vereinfacht werden, da in diesem Fall die y-Koordinate $y_{M'}$ gleich Null ist. Die Aufgabe besteht bei dieser Formulierung darin, den Wert von $x_{M'}$ zu bestimmen. Im Folgenden wird eine Lösung erläutert.

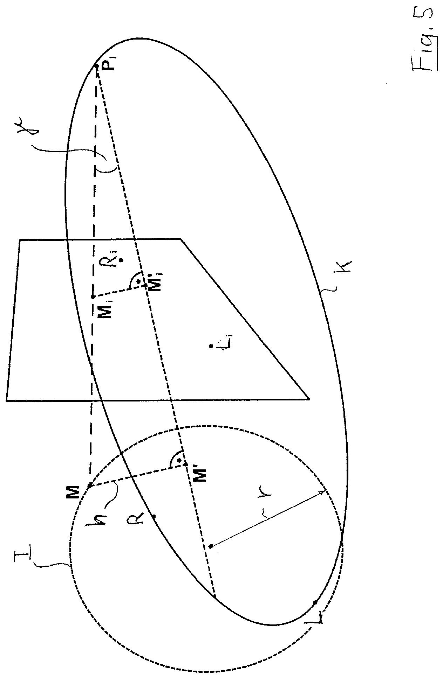

Zur Festlegung der Position von $P_i$ auf dem Referenzkreis K und damit auch zur Festlegung der Lage von M' auf der Verbindungsgerade V kann wie folgt vorgegangen werden (vgl. Fig. 5)

Die dritte Markierung M liegt auf einem Kreis I, dessen Radius r durch die geometrische Konstruktion des Markierungsmusters bekannt ist (r ist die Höhe des Dreiecks L-R-M mit Basis L-R). Damit lässt sich P als Funktion von M' beschreiben. Zunächst wird der Abstand h von M zu E betrachtet, also die Höhe von M über der Referenzebene E. Da M auf I liegt, gilt

$$h = d(M, E) = d(M, M') = \sqrt{r^2 - x_M'^2}.$$

Die Höhe h lässt sich auch mit Hilfe des Winkels $\gamma = \angle(M'_i, M_i)$ und dem Abstand a zwischen $P_i$ und M' bestimmen. $\gamma$ ist hierbei der Steigungswinkel der Linie $P_i$ - M über der Referenzebene E am Ort des Projektionszentrums $P_i$:

$$h = a \cdot \tan(\gamma).$$

Damit gilt:

$$\sqrt{r^2 - x_M'^2} = a \cdot \tan(\gamma).$$

Durch Quadrieren und Erweitern ergibt sich das Polynom vierten Grades

$$ax^4 + bx^3 + cx^2 + dx + c = 0.$$

Mit der Steigung $m = \tan(\gamma)$ und der Vereinfachung $x = x'_M - x_C$ gelten folgende Koeffizienten:

$$a = m^2 + 1$$

$$b = 2(x_C - x_B)$$

$$c = v + (1 - 2x_C^2)B^2 - 4x_C x_B$$

$$d = 2(x_C B^2 - v x_B)$$

$$e = vB^2 + m^2(B^2)^2$$

wobei: $v = x_C^2 - r^2$ und $B^2 = x_B^2 + y_B^2$ gilt.

Hierbei bezeichnen die Variablen $x_C$, $x_B$ jeweils die x-Koordinate des entsprechenden Punkts B oder C etc im Hilfskoordinatensystem HKS.

Das Polynom hat vier mögliche Lösungen, die den vier Nullstellen entsprechen. Die zur Anwendungssituation passende Lösung, d.h. die richtige Nullstelle, ergibt sich wie folgt.

Da angenommen werden kann, dass das Markierungsmuster in Richtung der Kamera zeigt (wäre das nicht der Fall, dann wären nicht alle Markierungen zu "sehen"), ist die tatsächliche Lösung die mit dem geringsten Abstand von M zu P und somit dem größten Betrag der Nullstelle des Polynoms. Dieser Wert wird durch vierfache Iteration nach dem Newton-Verfahren gefunden, wobei mit $x_0 = r - x_C$ begonnen wird.

Ist die korrekte Nullstelle gefunden, kann die Position von $P_i$ als Schnittpunkt der Verbindungsgeraden V durch B und M' und den Referenzkreis K berechnet werden. Dadurch ergibt sich zunächst die Position der Kamera (Erfassungseinrichtung) in dem zum Markierungsmuster gehörenden Hilfskoordinatensystem. Eine Koordinatentransformation ergibt dann die gesuchte Position des Markierungsmusters in Kamerakoordinaten.

Eine allgemeinere Lösung, die auch für ungleichschenklige Dreiecke gilt, basiert auf dem gleichen Ansatz und ist unter Anwendung der obigen Prinzipien herleitbar. Aus Gründen der Übersichtlichkeit wird auf eine detaillierte Darstellung verzichtet.

Ausgehend von der relativen Position ist die relative Orientierung prinzipiell mit Hilfe an sich bekannter Verfahren ermittelbar. Im Folgenden wird eine bevorzugte, von den Erfindern entwickelte Variante dargestellt, die mit Rotationsmatrizen arbeitet. Dabei wird auf Fig. 2 Bezug genommen.

Zur Erinnerung: der Parameter $P_i$ beschreibt die Position des Projektionszentrums im Kamerakoordinatensystem KKS und ist so definiert, dass $P_i$ der Ursprung des Kamerakoordinatensystems ist. Der entsprechende Parameter P beschreibt das Projektionszentrum in einem dem Markierungsmuster zugeordneten Musterkoordinatensystem. Zur Bestimmung der Orientierung der Kamera (Erfassungseinrichtung) wird eine 3x3-Rotationsmatrix wie folgt aufgestellt: Unter Kenntnis der Position von P werden zwei Vektoren

$$W_L = \overrightarrow{PL}$$

und

$$W_R = \overrightarrow{PR}$$

berechnet. Diese sind im Allgemeinen nicht kollinear mit dem ersten Vektor $V_L$ und dem zweiten Vektor $V_R$, können aber durch Rotation in diese überführt bzw. mit diesen zur Deckung gebracht werden. Die entsprechende Rotationsmatrix wird durch Hintereinanderausführung zweier Rotationen derart komponiert, dass zunächst der erste Vektor $V_L$ (Fig. 2) kollinear zu $W_L$ verläuft und anschließend auch der zweite Vektor $V_R$ kollinear zu $W_R$ ist. Fig. 2 veranschaulicht, dass dies auf Grund des Modells gegeben sein muss. Die Schreibweise Rot(a, $\omega$) steht dabei für eine 3x3-Rotationsmatrix, die eine Rotation um die Achse a um den Winkel $\omega$ beschreibt. Bei der folgenden Kurzdarstellung von Rechenoperationen steht das Symbol "·" (Skalarprodukt) für die Anwendung einer Matrix auf einen Vektor oder eine Matrix und das Symbol "$\times$" für das Kreuzprodukt zweier Vektoren.

$$a1 = V_L \times W_L$$

$$\delta1 = \angle(V_L, W_L)$$

$$Rot1 = Rot(a1, \delta1)$$

$$VR' = Rot1 \cdot V_R$$

$$n1 = W_L \times V_R'$$

$$n2 = W_L \times W_R$$

$$a2 = n1 \times n2 , \quad \delta2 = \angle(n1, n2)$$

$$Rot2 = Rot(a2, \delta2)$$

$$Rot = Rot2 \cdot Rot1$$

Hiermit ist die Orientierung der Kamera durch die Matrix Rot eindeutig bestimmt. Zusammen mit P ist damit die relative Lage, also die Lagebeziehung zwischen Kamerakoordinatensystem und Musterkoordinatensystem, eindeutig bestimmt. Die relative Lage kann durch eine Transformationsmatrix beschrieben werden.

Das Verfahren kann unter Verwendung von kostengünstigen Komponenten realisiert werden. Bei Experimenten zur Überprüfung der Funktionsfähigkeit des Verfahrens wurde ein erster Modellhubschrauber ("leader") mit einem Markierungsmuster mit vier Leuchtmarkierungen mit IR-LEDs ausgestattet. Dieser Hubschrauber diente als Objekt, dessen relative Lage (Position und Orientierung) im Raum zu bestimmen war. Ein zweiter Modellhubschrauber ("follower") war mit einem Kameramodul ausgestattet, das eine IR-Kamera als optische Erfassungseinheit mit zweidimensionaler Sensorfläche enthielt. In diesem "follow-the-leader"-Szenario sollte der nachfolgende zweite Hubschrauber dem führenden ersten Hubschrauber in einem konstanten Abstand von 2 m folgen, wobei die Steuerung der Bewegungen des folgenden (zweiten) Hubschraubers auf Basis der mit Hilfe des Verfahrens ermittelten Lagedaten erfolgte.

Als Kameramodul wurde die Kameraeinheit einer Wii-Fernbedienung (Wii Remote oder verkürzt Wiimote) zur Spielkonsole der japanischen Firma Nintendo verwendet. Wenn die Kamera auf das Markierungsmuster gerichtet ist, zeichnen sich die Abbilder der Leuchtmarkierungen als vier helle Bereiche ab. Das Kameramodul bestimmt bereits die 2D-Bildkoordinaten dieser Bereiche und gibt diese in Pixelkoordinaten aus. Eine Auflösung von 1024x768 Pixeln, die durch 8-fache Subpixel-Analyse erreicht wurde, war für die Aufgabe ausreichend.

In dem nachfolgenden zweiten Modellhubschrauber war weiterhin ein an das Kameramodul angeschlossener, speziell programmierter Mikrocontroller vorgesehen, auf dem die Berechnungen des Auswertungsverfahrens, also die Umrechnung von Bilddaten in Lagedaten, durchgeführt wurde. Mit dem Mikrokontroller wurde allein aufgrund der Bildkoordinaten die Raumlage der Kamera relativ zum Markierungsmuster bestimmt. Auf Basis dieser Lagedaten wurde der zweite Hubschrauber gesteuert.

Die Versuche zeigten, dass der nachfolgende Hubschrauber dem führenden Hubschrauber bei dessen Bewegungen mit geringen Abweichungen bei allen Bewegungen folgen konnte. Diese Versuche belegen, dass mit Hilfe des Auswertungsverfahrens eine geringe Latenzzeit und hohe Wiederholungsraten auch bei Implementierung auf einer einfachen Recheneinheit, wie einem Mikrocontroller, möglich sind.

Das Grundprinzip kann auch in einem Eingabesystem genutzt werden, bei dem die Aufgabe darin besteht, mit Hilfe einer Kamera oder einer anderen optischen Erfassungseinrichtung die relative Lage eines mit einem Markierungsmuster versehenen Eingabegeräts im Raum mit geringer Latenz und somit praktisch in Echtzeit zu bestimmen. Aufgrund der direkten Berechnung auf einem Mikrocontroller sind für die Lagebestimmung keine Berechnungen auf dem zu steuernden Endgerät nötig, so dass sich dort ein reduzierter Datenstrom ergibt.

Ausführungsformen des Eingabesystems können für unterschiedliche Zwecke genutzt werden, von denen im Folgenden einige beispielhaft erläutert werden.

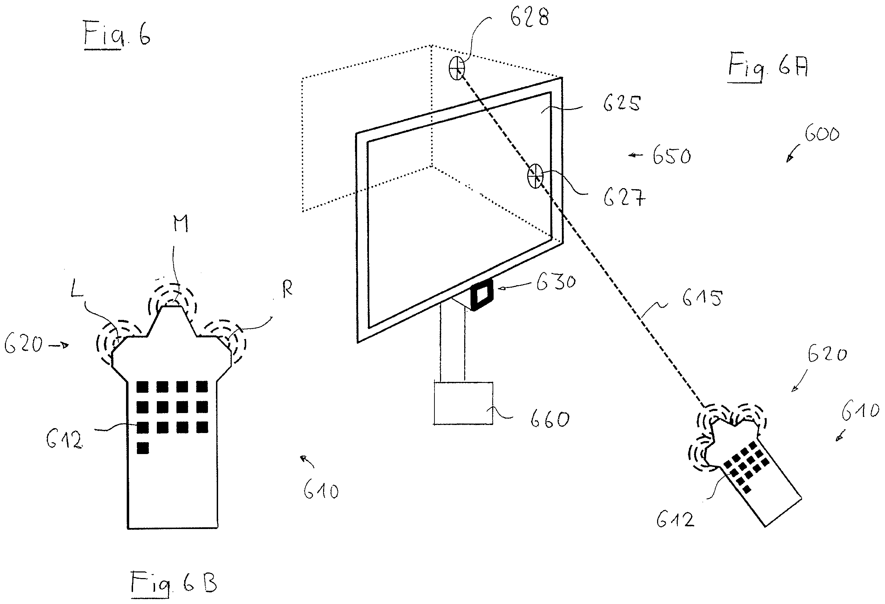

Fig. 6A zeigt eine schematische Übersichtsdarstellung über die Verwendung einer Ausführungsform eines Eingabesystems 600 zur Steuerung der Funktionen eines Fernsehgeräts 650. Das Fernsehgerät 650 ist ein Beispiel für ein mit Hilfe des Eingabesystems steuerbares Endgerät mit einem Bildschirm. Moderne Fernsehgeräte zeichnen sich durch immer komplexere Funktionen und entsprechend immer komplexere Menüs zur Auswahl und Steuerung der Funktionen aus. Das Eingabesystem wird im Beispielsfall dazu genutzt, die Position eines 2D-Cursors 627 auf dem Bildschirm 625 des Fernsehgeräts 650 zu bestimmen bzw. den Cursor über dem Bildschirm zu bewegen. Sofern es sich um ein Fernsehgerät mit dreidimensionalen Darstellungsmöglichkeiten handelt (3D-Fernsehgerät) kann auch ein entsprechender 3D-Cursor 628 in einem durch gestrichelte Linien angedeuteten virtuellen dreidimensionalen Raum bewegt werden.

Zu dem Eingabesystem 600 gehört ein in Fig. 6B vergrößert dargestelltes, frei im Raum bewegliches, handgehaltenes Eingabegerät 610, welches im Wesentlichen wie eine konventionelle drahtlose Fernbedienung aufgebaut ist und an der Oberseite seines Gehäuses eine Anzahl von Tasten 612 zur üblichen Bedienung des Fernsehgeräts (z.B. Programmauswahl, Lautstärke etc.) aufweist. Ein Anwender ist es gewohnt, mit der Fernbedienung in Richtung des Fernsehgeräts 650 zu zeigen, um das Fernsehgerät zu bedienen. Die Vorderseite des Eingabegeräts zeigt also bei der Benutzung normalerweise in Richtung des Bildschirms des Fernsehgeräts.

An der Vorderseite des Eingabegeräts ist ein Markierungsmuster 620 mit genau drei Markierungen (erste Markierung L, zweite Markierung R und dritte Markierung M) angebracht, die jeweils durch Infrarot-Leuchtdioden (IR-LEDs) gebildet sind. Wie in der Detaildarstellung in Fig. 6B gut zu erkennen ist, ist der an den Griffabschnitt anschließende Vorderabschnitt der Fernbedienung kreuzförmig gestaltet, wobei die erste Markierung L an einem Arm des Kreuzes, die zweite Markierung R am gegenüberliegenden Arm des Kreuzes und die mittlere Markierung M an der zum Fernsehgerät hin vorstehenden Spitze des Kreuzes angeordnet ist. Die Markierungen bilden ein gleichschenkliges Dreieck, mit der Strecke L-R als Basis, die länger ist als die zur dritten Markierung M führenden Schenkel. Die Leuchtdioden werden gemeinsam über einen gesonderten Schalter eingeschaltet bzw. ausgeschaltet. Es ist auch möglich, dass die Markierungen automatisch eingeschaltet werden, wenn die Fernbedienung vom Bediener bewegt wird. Hierzu kann ein Bewegungssensor in die Fernbedienung integriert sein.

Als weitere Komponente des Eingabesystems 600 ist eine Infrarot-Kamera 630 vorgesehen, die im Beispielsfall unterhalb des Bildschirms 625 am Fernsehgerät mit Blickrichtung zum Nutzer fest installiert ist. Die elektro-optischen Komponenten der Kamera sind Teil eines Kameramoduls, welches neben der Projektionsoptik und dem zweidimensionalen Sensor auch ein oder mehrere integrierte Recheneinheiten aufweist, die aus dem von der Kamera erfassten Bildpositionen der Markierungen digital weiterverarbeitbare Lagedaten an eine angeschlossene Verarbeitungseinheit 660 des Fernsehgeräts überträgt. Die Ermittlung der Lagedaten aus den von der Kamera erfassten, zu den Markierungen L, R und M gehörenden Bildpositionen erfolgt nach dem oben erläuterten Auswertungsverfahren oder nach einem dazu ergebnisäquivalenten Verfahren.

Es ist nur eine einzige Erfassungseinrichtung bzw. Kamera nötig und dementsprechend vorgesehen. Diese muss nicht unbedingt unter dem Bildschirm angeordnet sein, sondern sie kann auch oberhalb oder seitlich vom Bildschirm sitzen. Die Position der Erfassungseinrichtung muss lediglich bekannt oder durch Kalibrierung oder dergleichen bestimmbar sein.

Die Verarbeitungseinheit 660 ist Teil der Steuereinrichtung des Fernsehgeräts, welche die Bildschirmdarstellung steuert. So ist es möglich, auf Basis der vom Kameramodul gelieferten Lagedaten die Position des 2D-Cursors 627 und/oder des 3D-Kursors 268 zu steuern. Dabei ergibt sich eine äußerst intuitive Bedienmöglichkeit, wobei die Position der Cursor über einen virtuellen Strahl 615 an die Lage und Orientierung des Eingabegeräts 610 fest gekoppelt erscheint.

Für diese optische Steuerungsmöglichkeit ist keine Funkverbindung zwischen Fernbedienung (Eingabegerät) 610 und dem Fernsehgerät nötig. Die Steuerung erfolgt nahezu verzögerungsfrei, da die Rechenleistung der Recheneinheiten des Kameramoduls ausreicht, um schnell und präzise quasi in Echtzeit die Lagedaten zu ermitteln und an die Verarbeitungseinheit 660 zu übertragen.

Zur Erweiterung der Nutzungsmöglichkeiten des Fernsehgeräts mit Hilfe des Eingabesystems ist es lediglich erforderlich, das Kameramodul des Eingabesystems 600 ortsfest in Bezug auf den Bildschirm 625 des Fernsehgeräts anzubringen und an die Steuerung des Fernsehgeräts anzuschließen. Die Lagedaten können vom Kameramodul derart aufbereitet zu Verfügung gestellt werden, dass sie von der Verarbeitungseinheit 660 des Fernsehgeräts unmittelbar in Steuersignale für die Bildschirmdarstellung umgewandelt werden können. Für eine Umrüstung der Fernbedienung ist es ggf. lediglich erforderlich, die drei Markierungen für das Markierungsmuster in geometrisch richtiger Anordnung an der Vorderseite der Fernbedienung anzubringen.

Üblicherweise wird jedoch eine bereits mit Markierungen ausgestattete Fernbedienung (oder ein anderes Eingabegerät) in Verbindung mit dem Kameramodul als Komponentensatz (Kit) bzw. als Verkaufseinheit zur Verfügung gestellt.

Die zusätzlichen möglichen Freiheitsgrade des virtuellen 3D-Cursors 628 erlauben auch komplexe Manipulationen in dem Steuerungsmenü oder in einem auf dem Fernsehgerät installierten 2D- oder 3D-Videospiel.

Für die Grundfunktionen des Eingabesystems 600 sind am Eingabegerät 610 außer den Markierungen des Markierungsmusters 620 keine weiteren Komponenten nötig. Insbesondere benötigt und hat das Eingabegerät dieses optischen Eingabesystems keine integrierte Kamera und auch keine Einrichtungen zur Herstellung einer Funkverbindung mit dem zu steuernden Endgerät.

Bei manchen Ausführungsformen ist jedoch zusätzlich zu dem Markierungsmuster mindestens ein Sensor vorgesehen, der es erlaubt, zusätzliche Informationen über die Lage, Orientierung und/oder den Bewegungszustand des Eingabegeräts zu liefern.

Es kann beispielsweise mindestens ein Beschleunigungssensor vorgesehen sein. Ggf. können drei orthogonal angeordnete Beschleunigungssensoren vorgesehen sein, um lineare Beschleunigungen in drei Raumrichtungen zu ermitteln, woraus translatorische Bewegungen berechnet werden können.

Alternativ oder zusätzlich kann mindestens ein Drehratensensor vorgesehen sein, um die Winkelgeschwindigkeit einer Bewegung um eine definierte Drehachse zu erfassen. Drei orthogonal angeordnete Drehratensensoren können vorgesehen sein, um die Winkelgeschwindigkeiten in Bezug auf drei Raumrichtungen zu ermitteln, woraus dann Rotationsbewegungen berechnet werden können.

Alternativ oder zusätzlich kann ein Magnetfeldsensor vorgesehen sein, der es nach Art eines Kompaßsensors erlaubt, die Orientierung des Eingabegeräts relativ zum Erdmagnetfeld zu ermitteln. In Kombination mit Beschleunigungssensoren und Drehratensensoren kann mit Hilfe solcher Sensoren eine inertiale Meßeinheit aufgebaut werden, die in das Eingabegerät integriert sein kann. Hierdurch lassen sich auch komplexe Videospiele und andere Anwendungen mit 2D oder 3D-Grafik realitätsnah steuern.

Im Falle mindestens eines zusätzlichen Sensors im Eingabegerät ist eine Übertragung der vom Sensor erfassten Informationen zu dem zu steuernden Endgerät vorgesehen. Eine drahtlose Übertragung kann beispielsweise über ein integriertes Funksendemodul erfolgen. Es wäre auch möglich, die von den selbst leuchtenden Markierungen emittierte Strahlung zu modulieren, um auf diese Weise eine optische Informationsübertragung von den Sensoren zum Endgerät zu ermöglichen.

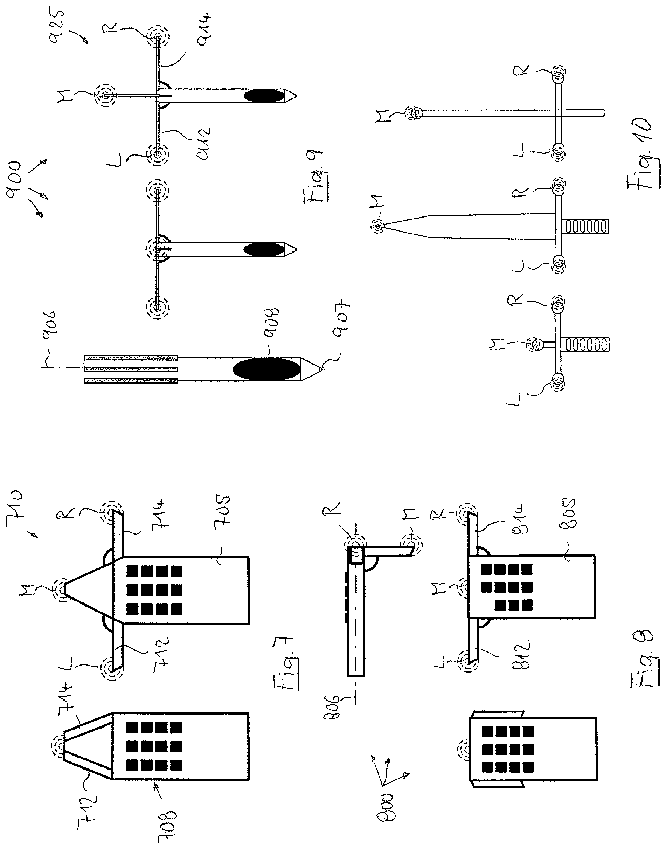

Um zu erreichen, dass die Markierung des Markierungsmusters von der Erfassungseinrichtung mit ausreichender örtlicher Auflösung erfasst werden können, sollten die Markierungen einen an den typischen Arbeitsabstand angepassten Mindestabstand zueinander haben, so dass deren Bilder auf der Sensorfläche klar voneinander getrennt werden können. Andererseits ist das räumlich ausgedehnte Markierungsmuster ggf. nicht bei allen Nutzungsarten eines Endgerätes erforderlich. Daher ist bei manchen Ausführungen vorgesehen, dass das Eingabegerät einen Griffabschnitt hat und dass an dem Eingabegerät mindestens ein Markierungsträger angebracht ist, der gegenüber dem Griffabschnitt beweglich ist und zwischen einer Neutralstellung und einer Funktionsstellung bewegt werden kann, wobei die vom Markierungsträger getragene Markierung in der Funktionsstellung die richtige relative Position zu den anderen Markierungen des Markierungsmusters hat. Beispielsweise kann der Markierungsträger schwenkbar am Griffabschnitt befestigt sein. Alternativ wäre auch ein linear verschiebbarer Markierungsträger oder eine Kombination von verschwenkbaren und linear verschiebbaren Markierungsträgern möglich. Anhand der Figuren 7 bis 9 werden Ausführungsbeispiele erläutert.

Die Ausführungsform des Endgeräts 700 in Fig. 7 ist nach Art einer Fernbedienung aufgebaut. An der Oberseite eines Griffabschnitts 705 ist ein Tastenfeld 708 mit mehreren Tasten zur Steuerung von Funktionen des zu steuernden Endgeräts angebracht. Das Gehäuse des Endgeräts ist zur Vorderseite hin dreieckförmig verjüngt und trägt an seiner abgeflachten Spitze die dritte Markierung M des Markierungsmusters 710. Auf jeder Seite des dreieckförmigen Mittelabschnitts ist ein länglicher Markierungsträger 712 bzw. 714 mittels eines Schwenkgelenks verschwenkbar angebracht. Die Markierungsträger können auf diese Weise zwischen der links gezeigten Neutralstellung und der rechts gezeigten Funktionsstellung verschwenkt werden, wobei die Markierungsträger in der eingeklappten Neutralstellung an den schrägen Seitenflanken des Mittelabschnitts anliegen und in der Funktionsstellung nach Art von Armen nach außen abstehen. An den äußeren Enden der Markierungsträger sind jeweils die erste und die zweite Markierung L bzw. R angebracht, die in der Funktionsstellung mit der fest installierten dritten Markierung M ein gleichschenkliges Dreieck bilden.

Anhand des Ausführungsbeispiels von Fig. 8 ist gezeigt, dass es auch möglich ist, alle drei Markierungen L, R und M an beweglichen Markierungsträgern anzubringen, die gegenüber dem Griffabschnitt 805 des Eingabegeräts 800 beweglich, insbesondere verschwenkbar sind. Aus der oberen Teilfigur ist erkennbar, dass der relativ flache Griffabschnitt eine Ebene 806 definiert. Alle drei Markierungen sind an den äußeren Enden von verschwenkbaren Markierungsträgern 812, 814, 816 angebracht. Die dritte Markierung M ist dabei an einem nach unten aus der Ebene 806 heraus verschwenkbaren Markierungsträger 816 befestigt, während die erste und die zweite Markierung, die die Basis des gleichschenkligen Dreiecks bilden, an den Enden von Markierungsträgern angebracht sind, die in der Ebene 806 nach außen geschwenkt werden können.

Fig. 9 zeigt ein Beispiel eines Eingabegeräts 900, welches im Wesentlichen wie ein Zeichenstift aufgebaut und dimensioniert ist. Ein im Wesentlichen zylindrischer oder im Querschnitt polygonaler Griffabschnitt 905 hat eine Längsachse 906 und eine in dieser Richtung gemessene Länge zwischen ca. 100 mm und ca. 200 mm, insbesondere zwischen 120 mm und 160 mm. Mit einem Durchmesser zwischen ca. 10 mm und ca. 20 mm ist das Eingabegerät griffgünstig gestaltet. Das vordere Ende ist konisch verjüngt. Dort ragt die Spitze 907 eines elastisch nachgiebig gelagerten Stabs heraus, der mit einem Drucksensor im Inneren des zylindrischen Gehäuses gekoppelt ist.

Am hinteren Ende befinden sich drei am Griffabschnitt schwenkbar gelagerte Markierungsträger 912, 914, 916, die in der linken Teilfigur von Fig. 9 in ihrer Neutralstellung gezeigt sind, bei der sie im Wesentlichen parallel zur Längsachse 906 verlaufen. Sie können dabei an der Außenseite des Gehäuses aufliegen oder in entsprechende Längsschlitze teilweise oder ganz eingefügt sein. Jeder der federbelasteten Markierungsträger ist mittels eines am hinteren Ende des Griffabschnitts angebrachten Schwenkgelenks nach außen schwenkbar und trägt an seinem äußeren Ende jeweils eine Markierung des Markierungsmusters 925. Im nach außen geklappten Funktionszustand (mittlere und rechte Teilfigur), der sich nach Betätigen des Auslöseknopfs 908 automatisch einstellt, bilden die Markierungen L, R, M ein gleichschenkliges Dreieck. Eine Besonderheit besteht dabei darin, dass die erste Markierung L und die zweite Markierung R jeweils nur bis in eine senkrecht zur Mittellängsachse 906 verlaufende Richtung verschwenkt werden können, während der Markierungsträger 914 für die dritte Markierung M wahlweise in den nach außen senkrecht abstehende Stellung oder in eine Stellung im Wesentlichen parallel zur Mittellängsachse 906 geschwenkt werden kann (rechte Teilfigur). So kann je nach Anwendungssituation diejenige räumliche Konfiguration eingestellt werden, bei der die Markierungen von den Positionen der zugeordneten Kamera in einer Dreiecksanordnung erscheinen.

Diese Ausführungsform eines Eingabegeräts ist besonders für Graphikanwendungen nützlich. Das Eingabegerät kann nach Art eines Zeichenstifts vom Nutzer auf eine ebene oder nicht-ebene Auflagefläche gedrückt und in verschiedene Richtungen translatorisch bewegt sowie verschwenkt werden. Die relative Lage wird jeweils über ein mit Kameramodul ausgestattetes Erfassungssystem erfasst. Zum Auslösen einer Aktion, beispielsweise zum Erzeugen einer Farbfläche auf einer zu erzeugenden Graphik, wird das Eingabegerät auf die Auflagefläche gedrückt. Der Druck wird mittels des integrierten Drucksensors erfasst und in entsprechende Signale umgewandelt, um beispielsweise eine gezeichnete Linie auf einen Bildschirm bzw. in der zugrundeliegenden digitalen Graphik mehr oder weniger breit erscheinen zu lassen. Das stiftförmige Eingabegerät kann z.B. in Verbindung mit einem Graphiktablett benutzt werden.

Einige Nutzungsmöglichkeiten der Erfindung wurden anhand von Ausführungsbeispielen detailliert beschrieben. Die Nutzung ist jedoch nicht darauf beschränkt.

Beispielsweise könnte anstelle des Aufbaus des Eingabesystems von Fig. 1 auch eine andere Aufgabenverteilung vorgesehen sein. Z.B. könnte das Kameramodul "dumm" sein und lediglich unverarbeitete Bildsignale zurückliefern. Der Mikrocontroller 400 muss keine separate Komponente sein. Dann würde die Punktlokalisation (Erzeugung der digitalen Bilddaten) und die Berechnung der digitalen Lagedaten von der Verarbeitungseinheit 500 durchgeführt werden. Dies könnte z.B. eine Standard-Version eines Laptop mit eingebauter Kamera oberhalb des Displays sein, vor dem ein Stift oder ein anderes Eingabegerät zur Raumlagebestimmung bewegt wird. Bei dieser Konfiguration würden die wesentlichen Berechnungen durch einen schnellen Laptop-Prozessor durchgeführt, was bei einem dual oder multiple-core-Prozessor aufgrund des Ressourcen schonenden Auswertungsverfahrens gut möglich ist.

Auch die Eingabegeräte sind nicht auf die dargestellten Varianten beschränkt. Insbesondere bei Anwendungen für den Spielemarkt können phantasievolle Gestaltungen attraktiv sein. Beispielsweise kann ein Eingabegerät die Form eines Schwertknauf haben, bei dem virtuell ein Schwert oder ähnliches eingeblendet werden kann. Ein Eingabegerät kann auch als Schwert oder Zauberstab gestaltet sein, bei dem z.B. die mittlere (dritte) Markierung entlang des Arms platziert werden kann (vgl. Fig. 10).

## Patentansprüche

1.  Verfahren zur Bestimmung der relativen Lage eines Objekts (200) im Raum in sechs räumlichen Freiheitsgraden mit folgenden Schritten:

    Anbringen eines Markierungsmusters (250) mit mindestens drei Markierungen an dem Objekt; Bereitstellen einer optischen Erfassungseinrichtung (300) mit einer zweidimensionalen Sensorfläche (325); Bewegen des Objekts im Erfassungsbereich der optischen Erfassungseinrichtung derart, dass das Markierungsmuster durch die Erfassungseinrichtung erfassbar ist; Projizieren der Markierungen auf zugeordnete Bildpositionen auf der zweidimensionalen Sensorfläche; Ermitteln von Bildkoordinaten der zu den Markierungen gehörenden Bildpositionen auf der Sensorfläche; Bestimmen der relativen Lage des Markierungsmusters durch Auswerten der Bildkoordinaten mittels eines Auswertungsverfahrens, das in einer der Erfassungseinrichtung zugeordneten Recheneinheit (340, 400) durchgeführt wird, und das durch folgende Schritte gekennzeichnet ist:

    Auswählen einer ersten Bildposition ($L_i$) und einer zweiten Bildposition ($R_i$), wobei die erste Bildposition einer ersten Markierung (L) und die zweite Bildposition einer zweiten Markierung (R) des Markierungsmusters zugeordnet ist; wobei ein erster Vektor zwischen einem Projektionszentrum ($P_i$) der Erfassungseinrichtung und der ersten Bildposition ($L_i$) und ein zweiter Vektor zwischen dem Projektionszentrum und der zweiten Bildposition ($R_i$) einen ersten Winkel ($\varepsilon$) einschließen und eine Referenzebene (E) aufspannen, und wobei eine senkrechte Projektion einer zu einer dritten Markierung (M) gehörenden

dritten Bildposition (M$_i$) auf die Referenzebene einen Fußpunkt (M$_i$') der dritten Markierung definiert; und
Ermitteln der Position eines Invarianzpunktes (B), wobei die Position des Invarianzpunktes unabhängig von der Position des Projektionszentrums (P$_i$) und der Position des Fußpunks (M$_i$') konstant ist und eine Verbindungsgerade durch das Projektionszentrum (P$_i$) und den Fußpunkt immer durch den Invarianzpunkt (B) verläuft, wobei ein Referenzkreis (K) ermittelt wird, der durch die erste Markierung (L), die zweite Markierung (R) und das Projektionszentrum (P$_i$) verläuft und einen Mittelpunkt (C) hat und wobei die Position des Invarianzpunktes (B) auf dem Referenzkreis (K) ermittelt wird.

**2.** Verfahren nach Anspruch 1, worin genau drei in einer Dreiecksanordnung angeordnete Markierungen für die Bestimmung der relativen Lage genutzt werden.

**3.** Verfahren nach Anspruch 1 oder 2, worin zum Auswählen der Bildpositionen ein Sortierungsschritt zur Zuordnung zwischen den auf der Sensorfläche vorliegenden Bildpositionen und den zugehörigen Markierungen des Markierungsmusters durchgeführt wird.

**4.** Verfahren nach Anspruch 3, worin zur Sortierung ein Sortierverfahren ausgewählt wird aus der Gruppe:

(i) Sortierung entlang mindestens einer vorgegebenen Bildrichtung;
(ii) Sortierung durch Bewegungsverfolgung;
(iii) Permutieren möglicher Zuordnungen und Identifizierung der richtigen Zuordnung durch Plausibilitätsprüfung; und
(iv) Nutzung einer zusätzlichen vierten Markierung.

**5.** Verfahren nach einem der vorhergehenden Ansprüche, worin von der Recheneinheit die Lage des Objekts repräsentierende digitale Lagedaten an eine Verarbeitungseinheit eines zu steuernden Endgeräts zur Weiterverarbeitung übertragen werden.

**6.** Optisches Eingabesystem (100) zur Erzeugung von digitalen Lagedaten, die die relative Lage des Eingabegeräts im Raum in sechs räumlichen Freiheitsgraden relativ zu einer optischen Erfassungseinrichtung repräsentieren, mit:

einem handgehaltenen Eingabegerät (200), an dem ein Markierungsmuster (250) mit einer ersten Markierung (L), einer zweiten Markierung (R) und einer dritten Markierung (M) angebracht ist;
einer optischen Erfassungseinrichtung (300) mit einer zweidimensionalen Sensorfläche (325) und einer Projektionsoptik (330), die in Bezug auf die Sensorfläche so angeordnet ist, dass Bildinformation aus einem Erfassungsbereich der Erfassungseinrichtung auf die Sensorfläche projizierbar ist; und
einer Recheneinheit (340, 400) zur Bestimmung der digitalen Lagedaten,

**dadurch gekennzeichnet,**
**dass** die Recheneinheit zur Durchführung des Auswertungsverfahrens gemäß Anspruch 1 konfiguriert ist.

**7.** Optisches Eingabesystem nach Anspruch 6, worin die Recheneinheit der Erfassungseinrichtung (300) derart zugeordnet ist, dass die von der Recheneinheit (340, 400) erzeugten digitalen Lagedaten (LD) an eine Verarbeitungseinheit (500) eines zu steuernden Endgeräts zur Weiterverarbeitung übertragbar sind.

**8.** Optisches Eingabesystem nach Anspruch 6 oder 7, worin das Markierungsmuster genau drei Markierungen (L, M, R) oder genau vier Markierungen (L, M, R, M4) aufweist, wobei die Markierungen vorzugsweise hinsichtlich ihrer Eigenschaften, insbesondere hinsichtlich Farbe, Form und Größe, identisch sind.

**9.** Optisches Eingabesystem nach Anspruch 6, 7 oder 8, worin die erste Markierung (L), die zweite Markierung (R) und die dritte Markierung (M) des Markierungsmusters ein gleichschenkliges Dreieck bilden, wobei Basiswinkel des gleichschenkligen Dreiecks vorzugsweise zwischen 20° und 70° liegen.

**10.** Optisches Eingabesystem nach Anspruch 9, worin zusätzlich zu der ersten Markierung (L), der zweiten Markierung (R) und der dritten Markierung (M) noch eine vierte Markierung (M4) vorgesehen ist, wobei die vierte Markierung vorzugsweise in Linie mit der ersten Markierung und der zweiten Markierung liegt, wobei insbesondere die erste Markierung, die zweite Markierung und die vierte Markierung entlang der Linie ungleichmäßig verteilt sind.

**11.** Optisches Eingabesystem nach einem der Ansprüche 6 bis 10, worin das Eingabegerät zusätzlich zu dem Markierungsmuster mindestens einen Sensor aufweist, der ausgewählt ist aus der Gruppe Beschleunigungssensor, Drehratensensor und Magnetfeldsensor.

**12.** Optisches Eingabesystem nach einem der Ansprüche 6 bis 11, worin das Eingabegerät einen Drucksensor zur Bestimmung des Anpressdrucks des Eingabegeräts auf eine Andruckfläche aufweist.

13. Optisches Eingabesystem nach einem der Ansprüche 6 bis 12, worin das Eingabegerät einen Griffabschnitt (705; 805; 905) hat und an dem Eingabegerät mindestens ein Markierungsträger (712, 713, 714; 812, 813, 814; 912, 913, 914) angebracht ist, der gegenüber dem Griffabschnitt beweglich ist und zwischen einer Neutralstellung und einer Funktionsstellung bewegt werden kann, wobei die vom Markierungsträger getragene Markierung in der Funktionsstellung die richtige relative Position zu den anderen Markierungen des Markierungsmusters hat.

14. Optisches Eingabesystem nach Anspruch 6, worin genau eine Erfassungseinrichtung vorgesehen ist, insbesondere genau eine Kamera, und worin das Markierungsmuster genau drei Markierungen (L, M, R) oder genau vier Markierungen (L, M, R, M4) aufweist.

**Claims**

1. Method for determining the relative position of an object (200) in space in six spatial degrees of freedom, comprising the following steps:

   applying a marking pattern (250) with at least three markings on the object; providing an optical detection apparatus (300) with a two-dimensional sensor surface (325);
   moving the object in the detection region of the optical detection apparatus in such a way that the marking pattern can be detected by the detection apparatus;
   projecting the markings onto assigned image locations on the two-dimensional sensor surface;
   establishing image coordinates of the image locations, associated with the markings, on the sensor surface;
   determining the relative position of the marking pattern by evaluating the image coordinates using an evaluation method which is performed in a computer unit (340, 400) assigned to the detection apparatus and **characterized by** the following steps:

   selecting a first image location ($L_i$) and a second image location ($R_i$), with the first image location being assigned to a first marking (L) and the second image location being assigned to a second marking (R) of the marking pattern;
   wherein a first vector between a projection center ($P_i$) of the detection apparatus and the first image location ($L_i$) and a second vector between the projection center and the second image location ($R_i$) include a first angle ($\varepsilon$) and span a reference plane (E), and wherein a perpendicular projection of a third image location ($M_i$), associated with a third marking (M), on the reference plane defines a foot ($M_i'$) of the third marking; and establishing the location of a fixed point (B), with the location of the fixed point being constant, independent of the location of the projection center ($P_i$) and the location of the foot ($M_i'$), and a connecting straight line through the projection center ($P_i$) and the foot always extending through the fixed point (B),

   wherein a reference circle (K) is established, which extends through the first marking (L), the second marking (R) and the projection center ($P_i$) and has a center (C), and wherein the location of the fixed point (B) on the reference circle (K) is established.

2. Method according to claim 1, wherein exactly three markings, arranged in a triangular arrangement, are employed for determining the relative position.

3. Method according to claim 1 or 2, wherein a sort step for the assignment between the image locations, present on the sensor surface, and the associated markings of the marking pattern is performed in order to select the image locations.

4. Method according to claim 3, wherein a sort method, selected from the following group, is used for the sort:

   (i) sort along at least one predetermined image direction;
   (ii) sort by movement tracking;
   (iii) permutation of possible assignments and identification of the correct assignment by checking the plausibility; and
   (iv) employment of an additional fourth marking.

5. Method according to any of the preceding claims, wherein the computer unit is used to transmit digital position data, representing the position of the object, to a processing unit of a terminal to be controlled for further processing purposes.

6. Optical input system (100) for generating digital position data, which represent the relative position of the input device in space in six spatial degrees of freedom relative to an optical detection apparatus, comprising:

   a hand-held input device (200), on which a marking pattern (250) with a first marking (L), a second marking (R) and a third marking (M) is applied;

an optical detection apparatus (300) with a two-dimensional sensor surface (325) and a projection optical unit (330), which, in relation to the sensor surface, is arranged in such a way that image information from a detection region of the detection apparatus can be projected onto the sensor surface; and

a computer unit (340, 400) for determining the digital position data, **characterized in that** the computer unit is configured to perform the evaluation method according to claim 1.

7. Optical input system according to claim 6, wherein the computer unit is assigned to the detection apparatus (300) in such a way that the digital position data (LD), generated by the computer unit (340, 400), can be transmitted to a processing unit (500) of a terminal to be controlled for further processing purposes.

8. Optical input system according to claim 6 or 7, wherein the marking pattern has exactly three markings (L, M, R) or exactly four markings (L, M, R, M4), with the markings preferably being identical in terms of the properties thereof, in particular in terms of color, shape and size.

9. Optical input system according to claim 6, 7 or 8, wherein the first marking (L), the second marking (R) and the third marking (M) of the marking pattern form an isosceles triangle, with base angles of the isosceles triangle preferably lying between 20° and 70°.

10. Optical input system according to claim 9, wherein, in addition to the first marking (L), the second marking (R) and the third marking (M), a fourth marking (M4) is also provided, with the fourth marking preferably lying in line with the first marking and the second marking, with, in particular, the first marking, the second marking and the fourth marking being distributed non-uniformly along the line.

11. Optical input system according to any of claims 6 to 10, wherein, in addition to the marking pattern, the input device comprises at least one sensor, which is selected from the group containing accelerometer, rate-of-rotation sensor and magnetic field sensor.

12. Optical input system according to any of claims 6 to 11, wherein the input device comprises a pressure sensor for determining the contact pressure of the input device on a contact surface.

13. Optical input system according to any of claims 6 to 12, wherein the input device has a holding section (705; 805; 905) and at least one marking support (712, 713, 714; 812, 813, 814; 912, 913, 914), which can move in relation to the holding section and can be moved between a neutral position and a functional position, is attached to the input device, with the marking carried by the marking support having the correct relative location to the other markings of the marking pattern in the functional position.

14. Optical input system according to claim 6, wherein provision is made for exactly one detection apparatus, more particularly exactly one camera, and wherein the marking pattern has exactly three markings (L, M, R) or exactly four markings (L, M, R, M4).

**Revendications**

1. Procédé pour déterminer la position relative d'un objet (200) dans l'espace dans six degrés de liberté spatiaux avec les étapes suivantes:

application d'un motif de marquage (250) avec au moins trois marquages sur l'objet;

mise à disposition d'un dispositif d'acquisition optique (300) avec une surface de détection bidimensionnelle (325);

mouvement de l'objet dans la zone d'acquisition du dispositif d'acquisition optique de telle sorte que le motif de marquage est acquérable par le dispositif d'acquisition;

projection des marquages sur les positions d'image associées sur la surface de détection bidimensionnelle;

détermination des coordonnées d'image des positions d'image sur la surface de détection, appartenant aux marquages;

détermination de la position relative du motif de marquage en évaluant les coordonnées d'image au moyen d'un procédé d'évaluation qui est exécuté dans une unité de calcul (340, 400) attribuée au dispositif d'acquisition, et qui est **caractérisé par** les étapes suivantes:

sélection d'une première position d'image ($L_i$) et d'une seconde position d'image ($R_i$), sachant que la première position d'image est attribuée à un premier marquage (L) et la seconde position d'image à un second marquage (R) du motif de marquage;

sachant qu'un premier vecteur entre un centre de projection ($P_i$) du dispositif d'acquisition et la première position d'image ($L_i$) et un second vecteur entre le centre de projection et la seconde position d'image ($R_i$) comprennent un premier angle ($\varepsilon$) et sous-tendent un plan de référence (E),

et sachant qu'une projection verticale d'une troisième position d'image ($M_i$) appartenant

à un troisième marquage (M), sur le plan de référence définit un pied (M$_i$') du troisième marquage; et

détermination de la position d'un point invariant (B), sachant que la position du point invariant est constante indépendamment de la position du centre de projection (P$_i$) et de la position du pied (M$_i$') et qu'une droite de liaison passant par le centre de projection (P$_i$) et le pied passe toujours par le point invariant (B),

sachant qu'est déterminé un cercle de référence (K) qui passe à travers le premier marquage (L), le second marquage (R) et le centre de projection (P$_i$) et a un centre (C) et sachant qu'est déterminée la position du point invariant (B) sur le cercle de référence (K).

2. Procédé selon la revendication 1, dans lequel exactement trois marquages disposés dans une disposition triangulaire sont utilisés pour la détermination de la position relative.

3. Procédé selon la revendication 1 ou 2, dans lequel pour sélectionner les positions d'image, une étape de tri est exécutée pour attribuer les positions d'image présentes sur la surface de détection aux marquages correspondants du motif de marquage.

4. Procédé selon la revendication 3, dans lequel, pour réaliser le tri, un procédé de tri est sélectionné parmi le groupe suivant:

(i) tri le long d'au moins une direction d'image prédéfinie;
(ii) tri par suivi des mouvements;
(iii) permutation des attributions possibles et identification de l'attribution correcte par contrôle de plausibilité; et
(iv) utilisation d'un quatrième marquage supplémentaire.

5. Procédé selon une des revendications précédentes, dans lequel les données de position numériques représentant la position de l'objet sont transmises par l'unité de calcul à une unité de traitement d'un terminal à commander pour leur traitement ultérieur.

6. Système de saisie optique (100) pour générer des données de position numériques qui représentent la position relative de l'appareil de saisie dans l'espace dans six degrés de liberté spatiaux par rapport à un dispositif d'acquisition optique, avec:

un appareil de saisie (200) tenu à la main, sur lequel est appliqué un motif de marquage (250) avec un premier marquage (L), un deuxième marquage (R) et un troisième marquage (M);
un dispositif d'acquisition optique (300) avec une surface de détection bidimensionnelle (325) et une optique de projection (330) qui est disposée par rapport à la surface de détection de telle sorte que l'information d'image provenant d'une zone d'acquisition du dispositif d'acquisition est projetable sur la surface de détection; et
une unité de calcul (340, 400) pour déterminer les données de position numériques,
**caractérisé en ce que** l'unité de calcul est configurée pour exécuter le procédé d'évaluation selon la revendication 1.

7. Système de saisie optique selon la revendication 6, dans lequel l'unité de calcul est attribuée au dispositif d'acquisition (300) de telle sorte que les données de position (LD) numériques générées par l'unité de calcul (340, 400) sont transmissibles à une unité de traitement (500) d'un terminal à commander, pour leur traitement ultérieur.

8. Système de saisie optique selon la revendication 6 ou 7, dans lequel le motif de marquage présente exactement trois marquages (L, M, R) ou exactement quatre marquages (L, M, R, M4), sachant que les marquages sont identiques de préférence en ce qui concerne leurs caractéristiques, notamment en ce qui concerne la couleur, la forme et la taille.

9. Système de saisie optique selon la revendication 6, 7 ou 8, dans lequel le premier marquage (L), le deuxième marquage (R) et le troisième marquage (M) du motif de marquage forme un triangle isocèle, sachant que l'angle de base du triangle isocèle est compris de préférence entre 20° et 70°.

10. Système de saisie optique selon la revendication 9, dans lequel est prévu, en plus du premier marquage (L), du deuxième marquage (R) et du troisième marquage (M), un quatrième marquage (M4), sachant que le quatrième marquage est de préférence aligné avec le premier et le deuxième marquages, sachant que notamment le premier marquage, le deuxième marquage et le quatrième marquage sont répartis inégalement le long de la ligne.

11. Système de saisie optique selon une des revendications 6 à 10, dans lequel l'appareil de saisie présente au moins un capteur en plus du motif de marquage, lequel capteur est sélectionné parmi le groupe des capteurs d'accélération, gyromètres et capteurs de champ magnétique.

12. Système de saisie optique selon une des revendications 6 à 11, dans lequel l'appareil de saisie présente un capteur de pression pour déterminer la pression d'appui de l'appareil de saisie sur une surface d'appui.

13. Système de saisie optique selon une des revendications 6 à 12, dans lequel l'appareil de saisie a une partie de préhension (705 ; 805 ; 905) et dans lequel au moins un support de marquage (712, 713, 714 ; 812, 813, 814 ; 912, 913, 914) est appliqué sur l'appareil de saisie, lequel support de marquage est mobile par rapport à la partie de préhension et peut être déplacé entre une position neutre et une position de fonctionnement, sachant que le marquage porté par le support de marquage, dans la position de fonctionnement a la position relative correcte par rapport aux autres marquages du motif de marquage.

14. Système de saisie optique selon la revendication 6, dans lequel est prévu exactement un dispositif d'acquisition, notamment exactement une caméra et dans lequel le motif de marquage présente exactement trois marquages (L, M, R) ou exactement quatre marquages (L, M, R, M4).

Fig. 1

EP 2 705 417 B1

Fig. 2

EP 2 705 417 B1

Fig. 3

EP 2 705 417 B1

Fig. 4

Fig. 5

Fig. 6

Fig. 6A

Fig 6 B

628
625
650
600
627
615
630
660
620
610
612
620
610
612

M
L
R
620 →
612

EP 2 705 417 B1

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6417836 B1
- US 20090070065 A1
- WO 2004114112 A1

**In der Beschreibung aufgeführte Nicht-Patentliteratur**

- **M. A. FISCHLER ; R. C. BOLLES.** Random Sample Consensus: A Paradigm for Model Fitting with Applications to Image Analysis and Automated Cartography. *Commun. ACM,* 1981, vol. 24 (6), 381-395
- **CHRISTIAN GEBKEN ; CHRISTIAN-ALBRECHTS.** Conformal geometric algebra in stochastic optimization problems of 3D-vision applications. Universität Kiel, 2009, 135-144
- **K. E. WENZEL ; A. MASSELLI ; A. ZELL.** Automatic Take Off, Tracking and Landing of a Miniature UAV on a Moving Carrier Vehicle. *Journal of Intelligent & Robotic Systems,* 2010, vol. 61, 221-238